# EUROPEAN PATENT SPECIFICATION

(11) **EP 3 655 827 B1**
(45) Date of publication and mention of the grant of the patent: **27.08.2025**
(21) Application number: 18755994.3
(22) Date of filing: 19.07.2018
(51) Int. Cl.: G05B 15/02

(54) **INDOOR ENVIRONMENTAL PREFERENCE MANAGEMENT**
UMGEBUNGSPRÄFERENZVERWALTUNG IN INNENRÄUMEN
GESTION DE PRÉFÉRENCES D'ENVIRONNEMENT INTÉRIEUR

(30) Priority: 21.07.2017 US 201762535420 P
(43) Date of publication of application: 27.05.2020
(73) Proprietor: Carrier Corporation, Palm Beach Gardens, FL 33418 (US)
(72) Inventor: XU, Ke, Kennesaw, Georgia 30144 (US); NGUYEN, Dang, Kennesaw, Georgia 30144 (US)
(74) Representative: Dehns
(86) International application number: PCT/US2018/042863
(87) International publication number: WO 2019/018622

(56) References cited:
- WO-A1-2016/025802
- WO-A1-2017/120262
- US-A1- 2014 316 581
- US-A1- 2014 365 017
- US-A1- 2016 139 582
- US-A1- 2017 191 695

## Description

The invention relates to a method of indoor environmental preference management. The subject matter disclosed herein generally relates to the field of building systems, and more particularly to occupant preference tracking and control of building systems.

Building occupants can have specific preferences for indoor environmental conditions, such as temperature, humidity, noise level, indoor air pollutant level, for example, CO2, or illuminance level. When an occupant feels uncomfortable in the indoor environment, the occupant may attempt to change a local thermostat set point. In residential applications, "smart" thermostats attempt to learn the set point patterns of the occupant over a period of time to automate set point adjustments. However, in larger buildings, such as a commercial building, techniques used in residential applications may not translate well to more complex environments with more zones and occupants.

US 2014/365017 A1 discloses a heating, cooling, and ventilation (HVAC) system control system operable to select an operational mode. The selection may be based on input data from sensors and occupancy level in combination with multiple models. Data collected over time may be used to form multiple types of models, including predictive models of building performance, future indoor conditions, and occupancy levels, and/or energy usage.

US 2016/139582 A1 discloses an HVAC schedule which is programmed for a thermostat using a combination of pre-existing schedules and automated schedule learning. In one example, a pre-existing schedule is initiated on the thermostat and the automated schedule learning is used to update the pre-existing schedule based on users' interactions with the thermostat.

WO 2017/120262 A1 discloses a thermostat for a building which is configured to communicate with building equipment and receive data from one or more sensors. The thermostat is configured to control the building equipment to affect an environmental condition within a first zone of the building when an occupant is detected within the first zone based on the data received from the sensors. When movement of the occupant to a second zone is detected by the sensors, the thermostat is configured to control the building equipment to affect an environmental condition within the second zone of the building.

According to one aspect of the invention, a method of indoor environmental preference management is provided. The method includes initializing, by a processor of a preference processing system, a plurality of occupant indoor environmental setting preferences for a plurality of users with a plurality of default settings based on a plurality of control types for a plurality of building systems. The method includes receiving environmental data indicative of a current state of a building system, and receiving feedback from a first user as a descriptive incremental adjustment to the current state of the building system. Feedback from the first user is received as a complaint based on a user-initiated action or as a survey input based on a system-initiated action, and a corresponding event record is stored with the occupant indoor environmental setting preferences. The method further includes determining the adjustment to the at least one control setting as an offset to the current state of the building system, wherein the adjustment is determined based on mapping the descriptive incremental adjustment to the offset to the current state via a translation table that indicates how the offset is determined. The processor of the preference processing system adjusts at least one control setting of the occupant indoor environmental setting preferences for the first user based on the feedback from the first user and based on the determined adjustment. At least one control device of a building automation system is operated based on the adjustment to the at least one control setting of the occupant indoor environmental setting preferences.

The method may include determining a location of the first user associated with the feedback from the first user, and storing a record of the location with the occupant indoor environmental setting preferences.

The method may include determining a time of day the feedback from the first user and storing a record of the time of day with the occupant indoor environmental setting preferences.

The method may include determining a time of year the feedback from the first user and storing a record of the time of year with the occupant indoor environmental setting preferences.

The method may include where the feedback from the first user is received as a change request from the first user based on a user-initiated action, a corresponding event record is stored with the occupant indoor environmental setting preferences, and the change request is passed to the building automation system.

The method may include determining one or more relationships between an event history and location data of the users based on the occupant indoor environmental setting preferences, and outputting a summary of the one or more relationships.

The method may include where the summary of the one or more relationships includes one or more of: grouped preferences of the users, grouped preferences at one or more locations, a complaint history of the control types, a complaint history of a user or a user group, and an adjustment summary of changes made to at least one control setting.

According to another aspect of the invention, a preference processing system for indoor environmental preference management includes a processor and a memory including computer-executable instructions that, when executed by the processor, cause the processor to perform operations. The operations include initializing a plurality of occupant indoor environmental setting preferences for a plurality of users with a plurality of default settings based on a plurality of control types for a plurality of building systems, receiving environmental data indicative of a current state of a building system; receiving feedback from a first user as a descriptive incremental adjustment to the current state of the building system; wherein the preference processing system is configured to receive the feedback from the first user as a complaint based on a user-initiated action or as a survey input based on a system-initiated action, and the preference processing system is configured to store a corresponding event record with the occupant indoor environmental setting preferences; determining the adjustment to the at least one control setting as an offset to the current state of the building system, wherein the adjustment is determined based on mapping the descriptive incremental adjustment to the offset to the current state via a translation table that indicates how the offset is determined; adjusting at least one control setting of the occupant indoor environmental setting preferences for the first user based on the feedback from the first user and based on the adjustment determined in the preceding step, and operating at least one control device of a building automation system based on the adjustment to the at least one control setting of the occupant indoor environmental setting preferences.

Technical effects of embodiments of the present disclosure include continuous capturing of occupant indoor environmental setting preferences, processing those preferences, and providing the preferences to adjust building systems based upon the preferences, and providing insights of building operations, such as occupants' satisfaction to building environment, based upon the collected data.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 illustrates a schematic view of a building control system,;
FIG. 2 depicts a block diagram of indoor environmental preference processing;
FIG. 3 depicts an example user interface for indoor environmental preference processing;
FIG. 4 depicts an example user interface for indoor environmental preference processing;
FIG. 5 depicts an example user interface for indoor environmental preference processing;
FIG. 6 depicts a state transition diagram for indoor environmental preference processing;
FIG. 7 depicts a state transition diagram for indoor environmental preference processing;
FIG. 8 depicts a data structure for indoor environmental preference processing; and
FIG. 9 depicts a process for indoor environmental preference management.

A detailed description of one or more embodiments of the disclosed apparatus and method are presented herein by way of exemplification and not limitation with reference to the Figures.

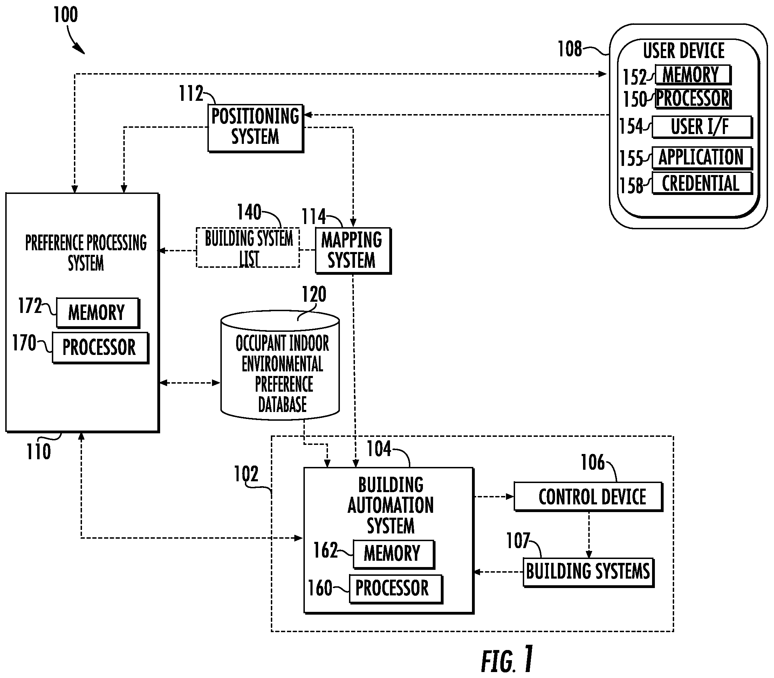

FIG. 1 depicts a building control system 100 in an example embodiment. The building control system 100 may be located partially or entirely within a building 102, and includes a building automation system 104 operable to command at least one control device 106 with at least one control setting for one or more building systems 107. The building control system 100 can also include a preference processing system 110 operable to interface with at least one user device 108, a positioning system 112, a mapping system 114, and the building automation system 104 through one or more communication channels. Communication within the building control system 100 can be performed using any known medium and protocol, such as one or more optical, wired, and/or wireless communication channels. In some embodiments, the preference processing system 110 provides a secure interface between the user device 108 and the building automation system 104. In alternate embodiments, user device 108 directly interfaces with the building automation system 104. Although depicted separately, the building automation system 104, user device 108, preference processing system 110, positioning system 112, and/or mapping system 114 can be combined in various combinations/sub-combinations or be further distributed between additional systems (not depicted). In some embodiments, the building 102 may be a building or a collection of buildings that may or may not be physically located near each other. The building 102 may include any number of floors.

In embodiments, the user device 108 may be a computing device such as a desktop computer. The user device 108 may also be a mobile computing device that is typically carried by a person, such as, for example a phone, personal digital assistance (PDA), smart watch, tablet, laptop, etc. The user device 108 may also be two separate devices that are synced together such as, for example, a cellular phone and a desktop computer synced over an internet connection. The user device 108 may include a processor 150, memory 152, and a user interface 154 as shown in FIG. 1. The processor 150 can be any type or combination of computer processors, such as a microprocessor, microcontroller, digital signal processor, application specific integrated circuit, programmable logic device, and/or field programmable gate array. The memory 152 is an example of a non-transitory computer readable storage medium tangibly embodied in the user device 108 including executable instructions stored therein, for instance, as firmware. The user device 108 is configured to store a unique credential 158 that may be shared with various components of the building control system 100 to establish a user identifier associated with a user of the user device 108. In a non-limiting example, the user device 108 may belong to an employee and/or resident of the building 102. The user device 108 may also include an application 155. Embodiments disclosed herein may operate through the application 155 installed on the user device 108.

Similar to the user device 108, the building automation system 104 includes a processor 160 and memory 162, and the preference processing system 110 includes a processor 170 and memory 172. Although not depicted in FIG. 1, it will be understood that other components of the building control system 100 can also include a processor and memory as described herein, such as within control device 106, positioning system 112, mapping system 114, and the like. The processor (e.g., processor 160, 170) can be any type or combination of computer processors, such as a microprocessor, microcontroller, digital signal processor, application specific integrated circuit, programmable logic device, and/or field programmable gate array. The memory (e.g., memory 162, 172) is an example of a non-transitory computer readable storage medium tangibly embodied in or operably connected to the path determination system including executable instructions stored therein, for instance, as firmware. Various communication protocols can be implemented to establish one-way and/or two-way communication within the building control system 100 using, for instance, wired and/or wireless links.

The positioning system 112 is configured to determine a location (i.e., current position) of the user of the user device 108. The location can include (x, y, z) coordinates of the user device 108 on a map. The (x, y, z) coordinates may translate to a latitude, a longitude, and an elevation. The positioning system 112 may use various methods in order to determine the location of the user, such as, for example, GPS, Bluetooth triangulation, Wi-Fi triangulation, cellular signal triangulation, or any other location determination method known to one of skill in the art. The positioning system 112 is further configured to transmit the current position to the user device 108 (i.e., location of the user) and to at least one of the preference processing system 110 and the mapping system 114. The preference processing system 110 and the mapping system 114 are configured to receive the location of the user device 108 from the positioning system 112. As an alternative or in addition to the positioning system 112, a badge-based access and entry system can be used to determine occupant location.

The mapping system 114 is further configured to store the (x, y, z) coordinates of control devices 106, building systems 107, and/or various features of the building 102. When the mapping system 114 is provided with the current location of a user device 108, the mapping system 114 is configured determine a building systems list 140 in response to the current location of the user device 108. The building systems list 140 can identify which building systems 107 that the user may have access to depending upon the location of the user device 108. For example, if the user enters conference room A with user device 108, the location of the user can be determined as conference room A, and the mapping system 114 can determine all the building systems 107 available to the user in conference room A in a building systems list 140. The building systems list 140 may then be displayed upon the user interface 154 of the user device 108 through application 155, and the user may select a building system 107 to control or provide feedback about on the building systems list 140 through the application 155.

The building systems 107 may include one or more individual controlled building settings including but not limited to lights, air temperature, air quality (CO2 level), humidity, noise level, blinds, etc. The building systems 107 are controlled by a corresponding instance of control device 106 based on control settings from building automation system 104, which can also be set/overridden by feedback from the user device 108. In one example, the feedback may be a change request from a user based on a user-initiated action to dim the lights, and thus the building system 107 may dim the lights in the location of the user. Adjustments to control devices 106 may include but is not limited to turning lights on/off, adjusting the strength of lights, adjusting the color of lights, increasing/decreasing the temperatures, opening/closing the blinds, increasing/reducing humidity levels, increasing/reducing fresh air intake levels, increasing/reducing noise levels (e.g., white noise generator or active noise cancellation), etc. The combination of multiple settings of the building systems 107 at a same location can be referred to as the scene.

In embodiments, the preference processing system 110 learns user preferences for a plurality of users through user devices 108 and stores indoor environmental user preferences in an occupant indoor environmental setting preference database 120. The contents of the occupant indoor environmental setting preference database 120 may be accessible by the building automation system 104 to make automated adjustments to the control devices 106 based on data from mapping system 114 and/or positioning system 112 that identifies current location information for a plurality of users in the building 102. The building automation system 104 and/or the preference processing system 110 can also determine one or more relationships between an event history and location data of the users based on the occupant indoor environmental setting preferences in the occupant indoor environmental setting preference database 120. Relationships can include various groupings of user with similar preferences, locations identified as having higher levels of feedback, time-of-day/time-of-year trends, occupancy patterns with respect to indoor environmental settings, and the like. The relationships can be summarized and output for further direct and/or indirect use, such as predictive adjustments by the building automation system 104, maintenance/service requests for the building systems 107, and/or other actions. Examples of summaries of relationships that can be extracted from the occupant indoor environmental setting preference database 120 can include grouped preferences of the users, grouped preferences at one or more locations, a complaint history of the control types, and an adjustment summary of changes made to at least one control setting, etc.

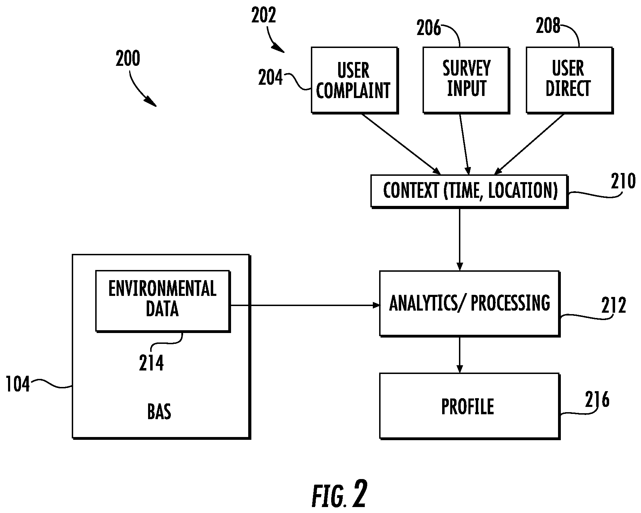

Referring now to FIG. 2, while referencing components of FIG. 1, FIG. 2 depicts a block diagram of indoor environmental preference processing 200 according to an embodiment. The indoor environmental preference processing 200 includes receiving feedback 202 from user device 108 at preference processing system 110. The feedback can include one or more of a complaint 204 based on a user-initiated action, a survey input 206 based on a system-initiated action, and a user direct value 208 of a change request from the user based on a user-initiated action. The preference processing system 110 can determine a context 210 of the feedback 202 based on additional information such as time (e.g., time of day and/or time of year) and/or location from positioning system 112 and/or mapping system 114. The preference processing system 110 can perform analytics/processing 212 based on the context 210 and environmental data 214 from the building automation system 104. The analytics/processing 212 can include partitioning the context 210 by user identifier information, location information, and associated events to form a profile 216 of preferences with respect to existing control settings and conditions captured in environmental data 214 to be stored in the occupant indoor environmental setting preference database 120. For example, occupant indoor environmental setting preferences can be determined on a per user basis at particular locations and times, corresponding to existing conditions and desired changes to the existing conditions as further described herein.

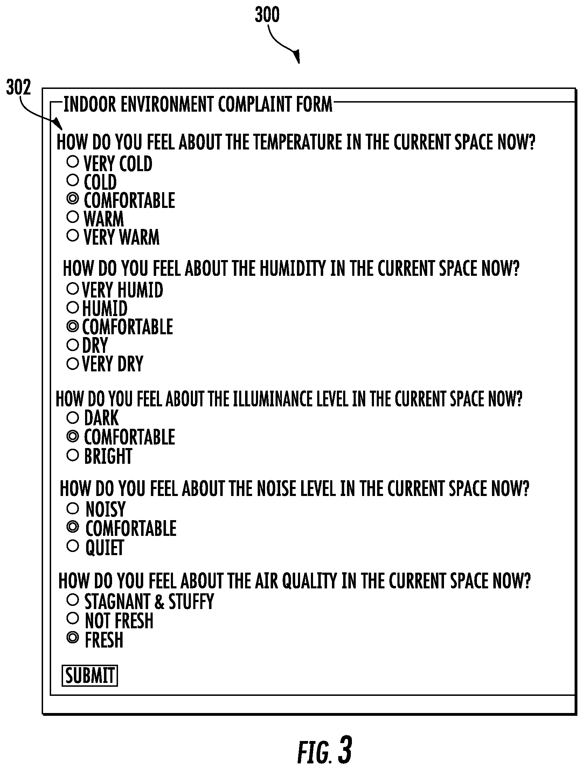

FIG. 3 depicts an example form 300 for indoor environmental preference processing, according to an embodiment as may be interactively displayed by application 155 on user interface 154 of a user device 108 of FIG. 1. The form 300 may be displayed on the user interface 154 based on a user-initiated action as complaint 204 of FIG. 2 or based on a system-initiated action as survey input 206 of FIG. 2. When a user is dissatisfied with indoor environmental provided by an indoor environment at a particular location, the user can launch the form 300 and answer a plurality of questions 302 associated with the location. Results collected from the form 300 can be tagged with time/date and location information, e.g., using positioning system 112 and/or mapping system 114 to develop the context 210 of FIG. 2. Similarly, the user may be periodically prompted by the application 155 to fill out the form 300 when additional user data is desired from the user at a particular time/location to ensure that the profile 216 of FIG. 2 is constructed with a robust data set. Examples of the questions 302 can include relative values to establish whether the user finds the current location comfortable in terms of temperature, humidity, illuminance level, noise level, air quality, and the like.

As one example, the indoor environmental preference processing 200 of FIG. 2 collected from the form 300 can be mapped from relative indoor environmental values into descriptive incremental adjustments to offset to a current state of building systems 107 according to a translation table (table 1). The translation table example of table 1 indicates how offsets to the current state of the building systems 107 can be determined. For example, if the user indicates that a location is "very cold", the corresponding preference for the user at the location can be set to the current temperature (e.g., extracted from the environmental data 214) plus three degrees Fahrenheit (plus 1.65 °C) per table 1.

**Table 1: Example of a translation table**

| User feedback (temp) | Very cold | Cold | Comfortable | Warm | Very warm |
|---|---|---|---|---|---|
| Offset (Δ °F) (°C) | +3 (+1.65) | +1 (+0.55) | 0 (0) | -1 (-0.55) | -3 (-1.65) |
| User feedback (RH) | Very humid | Humid | Comfortable | Dry | Very dry |
| Offset (Δ %) | -20 | -10 | 0 | +10 | +20 |
| User feedback (illuminance) | Dark | | Comfortable | Bright | |
| Offset (Δ lux) | +100 | | 0 | -100 | |
| User feedback (noise) | Noisy | | Comfortable | Quiet | |
| Offset (Δ dB) | -20 | | 0 | +20 | |
| User feedback (CO₂) | Stagnant & Stuffy | | | Not fresh | Fresh |
| Offset (Δ ppm) | -400 | | | -200 | 0 |

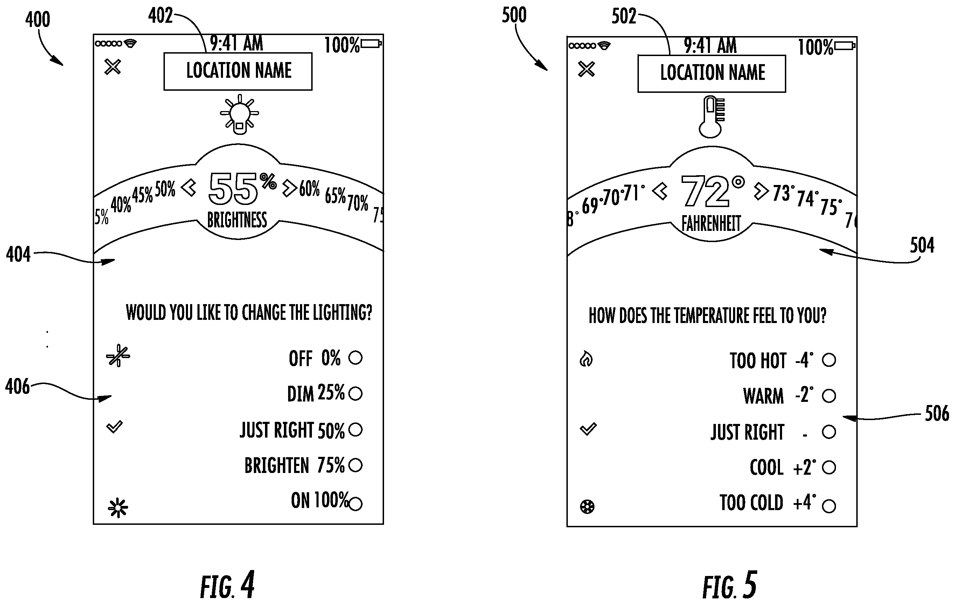

FIG. 4 depicts an example of a user interface 400 for indoor environmental preference processing as may be interactively displayed by application 155 on user interface 154 of a user device 108 of FIG. 1 according to an embodiment. The example of FIG. 4 can set the user direct value 208 of FIG. 2 of a change request from the user based on a user-initiated action for a change in illuminance. The user interface 400 can display a current location 402 of the user device 108 and may support precise changes 404 (e.g., exact illuminance level) or relative changes 406 to the level of illuminance. Relative changes 406 can map descriptive wording to predetermined levels of illuminance, such as "dim" to decrease by 25%, "brighten" to increase by 25%, and the like.

As another example, FIG. 5 depicts a user interface 500 for indoor environmental preference processing as may be interactively displayed by application 155 on user interface 154 of a user device 108 of FIG. 1 according to an embodiment. The example of FIG. 5 can set the user direct value 208 of FIG. 2 of a change request from the user based on a user-initiated action for a change in temperature. The user interface 500 can display a current location 502 of the user device 108 and may support precise changes 504 (e.g., exact temperature level) or relative changes 506 to the temperature level. Relative changes 506 can map descriptive wording to predetermined temperature levels, such as "too hot" to decrease by four degrees Fahrenheit (2.2 °C), "too cool" to increase by four degrees Fahrenheit (2.2 °C), and the like. Similar user interfaces can be created for each control type supported in the building 102 of FIG. 1.

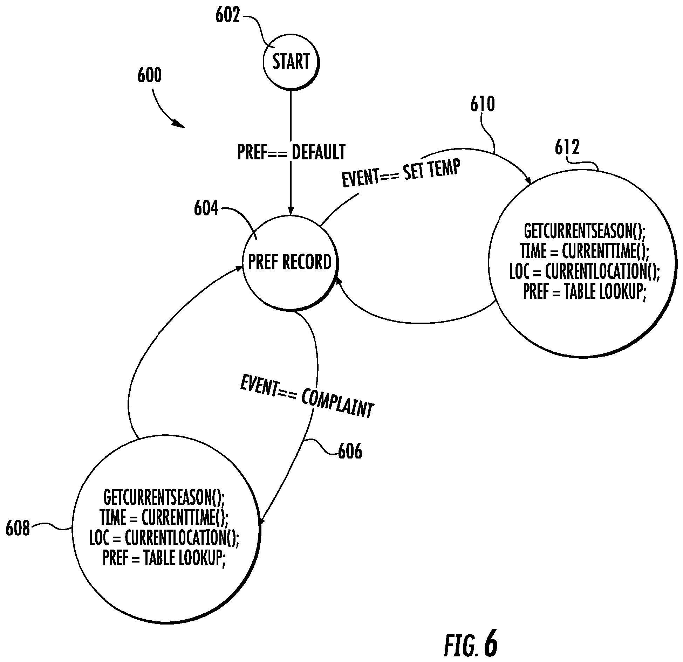

FIG. 6 depicts a state transition diagram 600 for indoor environmental preference processing according to an embodiment. At state 602, the preference processing system 110 can start to populate the occupant indoor environmental setting preference database 120 of FIG. 1 with default data provided, for example, by the building automation system 104. A preference record update 604 in the occupant indoor environmental setting preference database 120 can initially populate a record associated with a user to include default system settings for each of the building systems 107 of FIG. 1. Upon receiving a user complaint 204 or survey input 206 of FIG. 2 as an event 606, preference updates 608 can be made by looking up corresponding base values from the occupant indoor environmental setting preference database 120 and storing data collected from the user complaint 204 or survey input 206 along with other data to support the context 210, such as a time of day, time of year (e.g., season), and a current location of the user (e.g., position of user device 108 in building 102 of FIG. 1). Similarly, upon receiving a user direct value 208 (FIG. 2) of a change request (e.g., a change in temperature request) from the user as an event 610, preference updates 612 can be made by looking up corresponding base values from the occupant indoor environmental setting preference database 120 and storing data collected along with other data to support the context 210, such as a time of day, time of year (e.g., season), and a current location of the user (e.g., position of user device 108 in building 102 of FIG. 1).

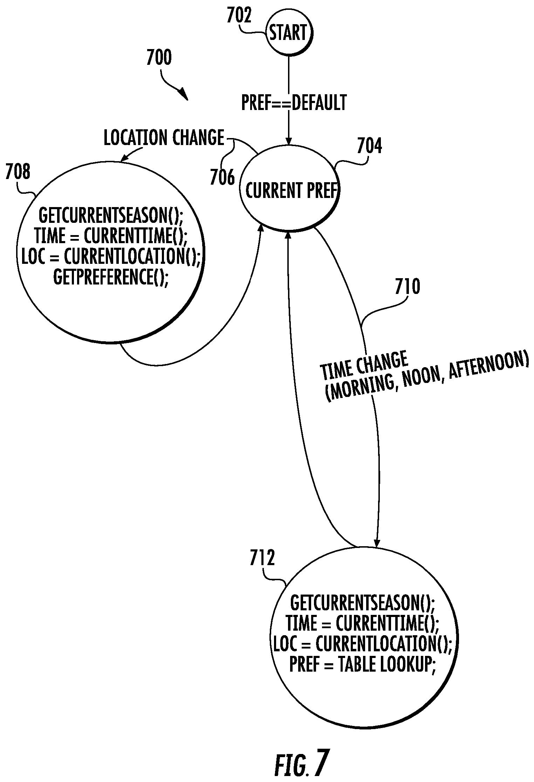

FIG. 7 depicts a state transition diagram 700 for indoor environmental preference processing according to an embodiment. At state 702, the preference processing system 110 can start to populate the occupant indoor environmental setting preference database 120 of FIG. 1 with default data provided, for example, by the building automation system 104. A preference record update 704 in the occupant indoor environmental setting preference database 120 can initially populate a record associated with a user to include default system settings for each of the building systems 107 of FIG. 1. Upon determining that the user has a location change 706 within the building 102 of FIG. 1, preference updates 708 can be made by looking up corresponding base values from the occupant indoor environmental setting preference database 120 and tagging the preferences with other data to support the context 210, such as a time of day, time of year (e.g., season), and a current location of the user (e.g., position of user device 108 in building 102 of FIG. 1). Similarly, upon a time change 710 transitioning to a different block of time (e.g., morning/noon/night), preference updates 712 can be made by looking up corresponding base values from the occupant indoor environmental setting preference database 120 and tagging the preferences with other data to support the context 210, such as a time of day, time of year (e.g., season), and a current location of the user (e.g., position of user device 108 in building 102 of FIG. 1).

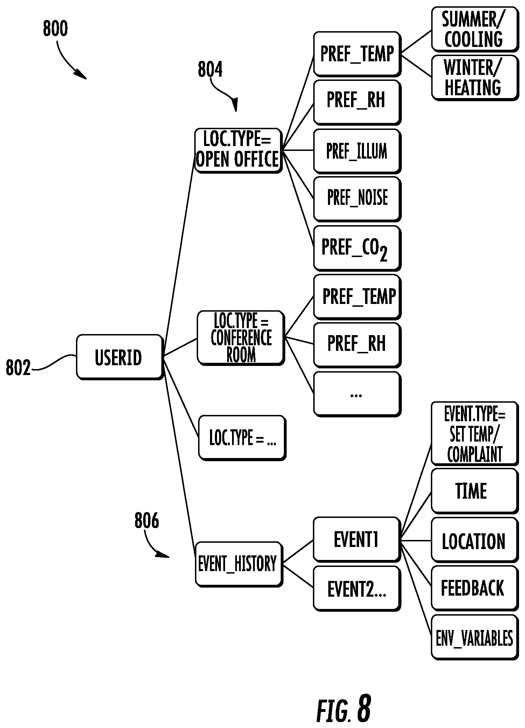

FIG. 8 depicts a data structure 800 for indoor environmental preference processing according to an embodiment. For each user identifier 802, occupant indoor environmental setting preferences can be tracked as a combination of location data 804 and event history 806. The location data 804 can identify discrete locations in the building 102, such as offices, conference rooms, or specific zones, with preferences tracked for each control type (e.g., heating, cooling, relative humidity, illuminance, noise, CO2 level, etc.). The location data 804 can also include time information, such as setting differences between seasons of the year. The event history 806 can track events such as complaints, change requests, survey responses, and the like. The event history 806 can track times, locations, values from feedback 202 (FIG. 2), environmental variables from environmental data 214 (FIG. 2), and other such values.

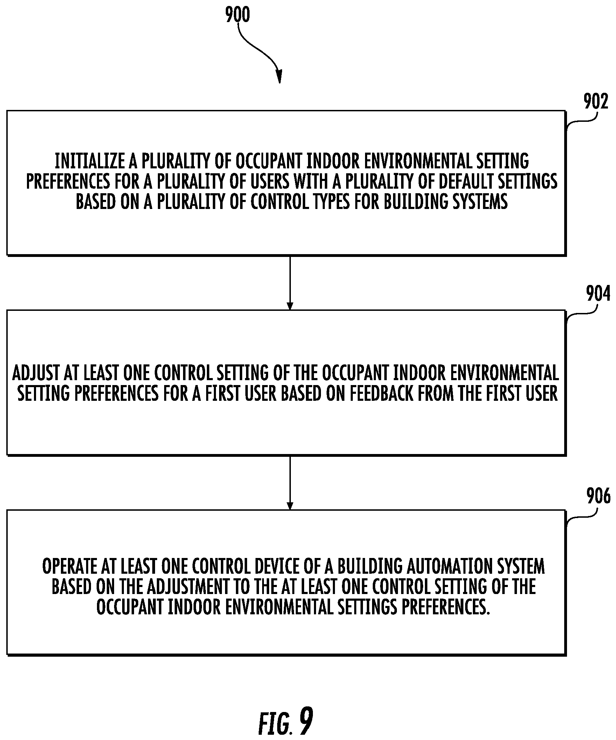

FIG. 9 shows a flow chart of a method 900 of indoor environmental preference management for controlling a plurality of building systems 107 of FIG. 1, in accordance with an embodiment of the disclosure. The method 900 is described in reference to FIGS. 1-9 and can include additional steps beyond those depicted in FIG. 9.

At block 902, a processor 170 of preference processing system 110 initializes a plurality of occupant indoor environmental setting preferences in the occupant indoor environmental setting preference database 120 for a plurality of users with a plurality of default settings based on a plurality of control types for the building systems 107. The default settings can be provided by the building automation system 104 based on existing/known default settings. For instance, a default setting for temperature may be 70 degrees F (21 °C) in the winter and 74 degrees F (23 °C) in the summer.

At block 904, the processor 170 of preference processing system 110 adjusts at least one control setting of the occupant indoor environmental setting preferences in the occupant indoor environmental setting preference database 120 for a first user based on feedback 202 from the first user as received from the user device 108. The preference processing system 110 can use data from the positioning system 112, and/or mapping system 114 to determine a location of the first user associated with the feedback 202 from the first user. A record of the location can be stored with the occupant indoor environmental setting preferences in the occupant indoor environmental setting preference database 120. The preference processing system 110 can also determine a time of day and/or time of year the feedback 202 from the first user. A record of the time of day and/or time of year can be stored with the occupant indoor environmental setting preferences in the occupant indoor environmental setting preference database 120. The feedback 202 from the first user can be received as a complaint 204 based on a user-initiated action, and a corresponding event record is stored with the occupant indoor environmental setting preferences in the occupant indoor environmental setting preference database 120. The feedback 202 from the first user can be received as a survey input 206 based on a system-initiated action, and a corresponding event record can be stored with the occupant indoor environmental setting preferences in the occupant indoor environmental setting preference database 120. The feedback 202 from the first user can be received as a user direct value 208 of a change request from the first user based on a user-initiated action, and a corresponding event record can be stored with the occupant indoor environmental setting preferences in the occupant indoor environmental setting preference database 120. The change request can be passed to the building automation system 104 to operate a control device 106 associated with the request. Adjustments can also be made based on changes to the location of the user and/or time changes.

Environmental data 214 indicative of a current state of a building system 107 can also be received at the preference processing system 110. The feedback 202 received from the first user can be formatted as a descriptive incremental adjustment (e.g., more humid, less humid, etc.) to the current state of the building system 107. An adjustment to at least one control setting can be determined as an offset to the current state of the building system 107 based mapping the descriptive incremental adjustment to a translation table (e.g., table 1).

At block 906, at least one control device 106 of a building automation system 104 is operated based on the adjustment to the at least one control setting of the occupant indoor environmental setting preferences from the occupant indoor environmental setting preference database 120. The at least one control device 106 can be operated in response to providing the occupant indoor environmental setting preferences to the building automation system 104, resulting in a change in one or more indoor environmental conditions in the building 102. One or more relationships between the event history 806 and location data 804 of a plurality of users from the occupant indoor environmental setting preference database 120 can be summarized and used for various applications. For example, machine learning can be used to learn group preferences, e.g., to potentially rearrange seating locations of users to reduce complaints. Heat maps can be generated of user preferences for multiple control types at different locations. Preferences can be compared to the types of space (e.g., meal area, conference area, desk space) to map preferences to types of activities. Noise complaint data can be used to generate a noise map to look for noise-related issues. Complaints can be tracked to identify potentially failing equipment, environmental impact of work conditions, and impact of specific types of events.

While the above description has described the flow process of FIG. 9 in a particular order, it should be appreciated that unless otherwise specifically required in the attached claims that the ordering of the steps may be varied.

As described above, embodiments can be in the form of processorimplemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

While the present disclosure has been described with reference to an exemplary embodiment or embodiments, it will be understood by those skilled in the art that various changes may be made and equivalents may be substituted for elements thereof. In addition, many modifications may be made to adapt a particular situation or material to the teachings of the present disclosure. Therefore, it is intended that the present invention not be limited to the particular embodiment disclosed as the best mode contemplated for carrying out this present disclosure, but that the present invention will include all embodiments falling within the scope of the claims.

## Claims

1. A method of indoor environmental preference management, the method comprising:
initializing, by a processor (170) of a preference processing system (110), a plurality of occupant indoor environmental setting preferences for a plurality of users with a plurality of default settings based on a plurality of control types for a plurality of building systems;
receiving environmental data indicative of a current state of a building system;
receiving feedback (202) from a first user as a descriptive incremental adjustment to the current state of the building system, wherein the feedback from the first user is received as a complaint (204) based on a user-initiated action or as a survey input (206) based on a system-initiated action, and a corresponding event record is stored with the occupant indoor environmental setting preferences,
determining an adjustment to the at least one control setting as an offset to the current state of the building system, wherein the adjustment is determined based on mapping the descriptive incremental adjustment to the offset to the current state via a translation table that indicates how the offset is determined;
adjusting, by the processor (170) of the preference processing system (110), at least one control setting of the occupant indoor environmental setting preferences for the first user based on the feedback (202) from the first user and based on the adjustment determined in the preceding step; and
operating at least one control device (106) of a building automation system (104) based on the adjustment to the at least one control setting of the occupant indoor environmental setting preferences.

2. The method of claim 1, further comprising:
determining a location of the first user associated with the feedback (202) from the first user; and
storing a record of the location with the occupant indoor environmental setting preferences.

3. The method of claim 2, further comprising:
determining a time of day the feedback (202) from the first user; and
storing a record of the time of day with the occupant indoor environmental setting preferences.

4. The method of claim 3, further comprising:
determining a time of year the feedback (202) from the first user; and
storing a record of the time of year with the occupant indoor environmental setting preferences.

5. The method of claim 1, wherein the feedback (202) from the first user is received as a change request from the first user based on the user-initiated action, and the change request is passed to the building automation system (104).

6. The method of claim 1, further comprising:
determining one or more relationships between an event history and location data of the users based on the occupant indoor environmental setting preferences; and
outputting a summary of the one or more relationships.

7. The method of claim 6, wherein the summary of the one or more relationships comprises one or more of: grouped preferences of the users, grouped preferences at one or more locations, a complaint history of the control types, a complaint history of a user or a user group, and an adjustment summary of changes made to the at least one control setting.

8. A preference processing system (110) for indoor environmental preference management, the preference processing system comprising:
a processor (170); and
a memory (172) comprising computer-executable instructions that, when executed by the processor, cause the processor to perform operations, the operations comprising:
initializing a plurality of occupant indoor environmental setting preferences for a plurality of users with a plurality of default settings based on a plurality of control types for a plurality of building systems;
receiving environmental data indicative of a current state of a building system;
receiving feedback (202) from a first user as a descriptive incremental adjustment to the current state of the building system; wherein the preference processing system is configured to receive the feedback from the first user as a complaint (204) based on a user-initiated action or as a survey input (206) based on a system-initiated action, and the preference processing system (110) is configured to store a corresponding event record with the occupant indoor environmental setting preferences;
determining the adjustment to the at least one control setting as an offset to the current state of the building system, wherein the adjustment is determined based on mapping the descriptive incremental adjustment to the offset to the current state via a translation table that indicates how the offset is determined;
adjusting at least one control setting of the occupant indoor environmental setting preferences for the first user based on the feedback (202) from the first user and based on the adjustment determined in the preceding step; and
operating at least one control device (106) of a building automation system (104) based on the adjustment to the at least one control setting of the occupant indoor environmental setting preferences.

9. The preference processing system of claim 8, wherein the operations further comprise:
determining a location of the first user associated with the feedback (202) from the first user; and
storing a record of the location with the occupant indoor environmental setting preferences.

10. The preference processing system of claim 9, wherein the operations further comprise:
determining a time of day the feedback (202) from the first user; and
storing a record of the time of day with the occupant indoor environmental setting preferences.

11. The preference processing system of claim 10, wherein the operations further comprise:
determining a time of year the feedback (202) from the first user; and
storing a record of the time of year with the occupant indoor environmental setting preferences.

12. The preference processing system of claim 8, wherein the feedback (202) from the first user is received as a change request from the first user based on a user-initiated action, and the change request is passed to the building automation system (104).

13. The preference processing system of claim 8, wherein the operations further comprise:
determining one or more relationships between an event history and location data of the users based on the occupant indoor environmental setting preferences; and
outputting a summary of the one or more relationships.

14. The preference processing system of claim 13, wherein the summary of the one or more relationships comprises one or more of: grouped preferences of the users, grouped preferences at one or more locations, a complaint history of the control types, a complaint history of a user or a user group, and an adjustment summary of changes made to the at least one control setting.

## Patentansprüche

1. Verfahren zur Umgebungspräferenzverwaltung in Innenräumen, wobei das Verfahren Folgendes umfasst:
Initialisieren einer Vielzahl von Bewohnerumgebungseinstellungspräferenzen in Innenräumen für eine Vielzahl von Benutzern mit einer Vielzahl von Standardeinstellungen basierend auf einer Vielzahl von Steuertypen für eine Vielzahl von Gebäudesystemen durch einen Prozessor (170) eines Präferenzverarbeitungssystems (110);
Empfangen von Umgebungsdaten, die einen aktuellen Zustand eines Gebäudesystems angeben;
Empfangen von Rückmeldungen (202) von einem ersten Benutzer als eine beschreibende inkrementelle Anpassung an den aktuellen Zustand des Gebäudesystems, wobei die Rückmeldung von dem ersten Benutzer als eine Beschwerde (204) basierend auf einer benutzerinitiierten Aktion oder als eine Umfrageeingabe (206) basierend auf einer systeminitiierten Aktion empfangen wird und ein entsprechender Ereignisdatensatz mit den Bewohnerumgebungseinstellungspräferenzen in Innenräumen gespeichert wird,
Bestimmen einer Anpassung der mindestens einen Steuereinstellung als ein Versatz zum aktuellen Zustand des Gebäudesystems, wobei die Anpassung basierend auf Abbilden der beschreibenden inkrementellen Anpassung des Versatzes auf den aktuellen Zustand über eine Übersetzungstabelle, die angibt, wie der Versatz bestimmt wird, bestimmt wird;
Anpassen mindestens einer Steuereinstellung der Bewohnerumgebungseinstellungspräferenzen in Innenräumen für den ersten Benutzer basierend auf der Rückmeldung (202) von dem ersten Benutzer und basierend auf der Anpassung, die in dem vorhergehenden Schritt bestimmt wird, durch den Prozessor (170) des Präferenzverarbeitungssystems (110); und
Betreiben mindestens einer Steuervorrichtung (106) eines Gebäudeautomationssystems (104) basierend auf der Anpassung an die mindestens eine Steuereinstellung der Bewohnerumgebungseinstellungspräferenzen in Innenräumen.

2. Verfahren nach Anspruch 1, ferner umfassend:
Bestimmen eines Standorts des ersten Benutzers, der der Rückmeldung (202) von dem ersten Benutzer zugeordnet ist; und
Speichern eines Datensatzes des Standorts mit den Bewohnerumgebungseinstellungspräferenzen in Innenräumen.

3. Verfahren nach Anspruch 2, ferner umfassend:
Bestimmen einer Tageszeit der Rückmeldung (202) von dem ersten Benutzer; und
Speichern eines Datensatzes der Tageszeit mit den Bewohnerumgebungseinstellungspräferenzen in Innenräumen.

4. Verfahren nach Anspruch 3, ferner umfassend:
Bestimmen einer Jahreszeit der Rückmeldung (202) von dem ersten Benutzer; und
Speichern eines Datensatzes der Jahreszeit mit den Bewohnerumgebungseinstellungspräferenzen in Innenräumen.

5. Verfahren nach Anspruch 1, wobei die Rückmeldung (202) von dem ersten Benutzer als Änderungsanforderung von dem ersten Benutzer basierend auf der benutzerinitiierten Aktion empfangen wird und die Änderungsanforderung an das Gebäudeautomationssystem (104) weitergeleitet wird.

6. Verfahren nach Anspruch 1, ferner umfassend:
Bestimmen einer oder mehrerer Beziehungen zwischen einer Ereignishistorie und Standortdaten der Benutzer basierend auf den Bewohnerumgebungseinstellungspräferenzen in Innenräumen; und
Ausgeben einer Zusammenfassung der einen oder der mehreren Beziehungen.

7. Verfahren nach Anspruch 6, wobei die Zusammenfassung der einen oder der mehreren Beziehungen eines oder mehrerer von Folgendem umfasst: gruppierte Präferenzen der Benutzer, gruppierte Präferenzen an einem oder mehreren Standorten, eine Beschwerdehistorie der Steuertypen, eine Beschwerdehistorie eines Benutzers oder einer Benutzergruppe und eine Anpassungszusammenfassung von Änderungen, die an der mindestens einen Steuereinstellung vorgenommen wurden.

8. Präferenzverarbeitungssystem (110) zur Umgebungspräferenzverwaltung in Innenräumen, wobei das Präferenzverarbeitungssystem Folgendes umfasst:
einen Prozessor (170); und
einen Speicher (172), umfassend computerausführbare Anweisungen, die, wenn sie durch den Prozessor ausgeführt werden, den Prozessor veranlassen, Vorgänge durchzuführen, wobei die Vorgänge Folgendes umfassen:
Initialisieren einer Vielzahl von Bewohnerumgebungseinstellungspräferenzen in Innenräumen für eine Vielzahl von Benutzern mit einer Vielzahl von Standardeinstellungen basierend auf einer Vielzahl von Steuertypen für eine Vielzahl von Gebäudesystemen;
Empfangen von Umgebungsdaten, die einen aktuellen Zustand eines Gebäudesystems angeben;
Empfangen von Rückmeldungen (202) von einem ersten Benutzer als beschreibende inkrementelle Anpassung an den aktuellen Zustand des Gebäudesystems; wobei das Präferenzverarbeitungssystem konfiguriert ist, die Rückmeldung von dem ersten Benutzer als Beschwerde (204) basierend auf einer benutzerinitiierten Aktion oder als Umfrageeingabe (206) basierend auf einer systeminitiierten Aktion zu empfangen, und das Präferenzverarbeitungssystem (110) dazu konfiguriert ist, einen entsprechenden Ereignisdatensatz mit den Bewohnerumgebungseinstellungspräferenzen in Innenräumen zu speichern;
Bestimmen der Anpassung der mindestens einen Steuereinstellung als ein Versatz zum aktuellen Zustand des Gebäudesystems, wobei die Anpassung basierend auf Abbilden der beschreibenden inkrementellen Anpassung des Versatzes auf den aktuellen Zustand über eine Übersetzungstabelle, die angibt, wie der Versatz bestimmt wird, bestimmt wird;
Anpassen mindestens einer Steuereinstellung der Bewohnerumgebungseinstellungspräferenzen in Innenräumen für den ersten Benutzer basierend auf der Rückmeldung (202) von dem ersten Benutzer und basierend auf der Anpassung, die in dem vorhergehenden Schritt bestimmt wird; und
Betreiben mindestens einer Steuervorrichtung (106) eines Gebäudeautomationssystems (104) basierend auf der Anpassung an die mindestens eine Steuereinstellung der Bewohnerumgebungseinstellungspräferenzen in Innenräumen.

9. Präferenzverarbeitungssystem nach Anspruch 8, wobei die Vorgänge ferner Folgendes umfassen:
Bestimmen eines Standorts des ersten Benutzers, der der Rückmeldung (202) von dem ersten Benutzer zugeordnet ist; und
Speichern eines Datensatzes des Standorts mit den Bewohnerumgebungseinstellungspräferenzen in Innenräumen.

10. Präferenzverarbeitungssystem nach Anspruch 9, wobei die Vorgänge ferner Folgendes umfassen:
Bestimmen einer Tageszeit der Rückmeldung (202) von dem ersten Benutzer; und
Speichern eines Datensatzes der Tageszeit mit den Bewohnerumgebungseinstellungspräferenzen in Innenräumen.

11. Präferenzverarbeitungssystem nach Anspruch 10, wobei die Vorgänge ferner Folgendes umfassen:
Bestimmen einer Jahreszeit der Rückmeldung (202) von dem ersten Benutzer; und
Speichern eines Datensatzes der Jahreszeit mit den Bewohnerumgebungseinstellungspräferenzen in Innenräumen.

12. Präferenzverarbeitungssystem nach Anspruch 8, wobei die Rückmeldung (202) von dem ersten Benutzer als Änderungsanforderung von dem ersten Benutzer basierend auf einer benutzerinitiierten Aktion empfangen wird und die Änderungsanforderung an das Gebäudeautomationssystem (104) weitergeleitet wird.

13. Präferenzverarbeitungssystem nach Anspruch 8, wobei die Vorgänge ferner Folgendes umfassen:
Bestimmen einer oder mehrerer Beziehungen zwischen einer Ereignishistorie und Standortdaten der Benutzer basierend auf den Bewohnerumgebungseinstellungspräferenzen in Innenräumen; und
Ausgeben einer Zusammenfassung der einen oder der mehreren Beziehungen.

14. Präferenzverarbeitungssystem nach Anspruch 13, wobei die Zusammenfassung der einen oder der mehreren Beziehungen eines oder mehrerer von Folgendem umfasst: gruppierte Präferenzen der Benutzer, gruppierte Präferenzen an einem oder mehreren Standorten, eine Beschwerdehistorie der Steuertypen, eine Beschwerdehistorie eines Benutzers oder einer Benutzergruppe und eine Anpassungszusammenfassung von Änderungen, die an der mindestens einen Steuereinstellung vorgenommen wurden.

## Revendications

1. Procédé de gestion de préférences d'environnement intérieur, le procédé comprenant :
l'initialisation, par un processeur (170) d'un système de traitement de préférences (110), d'une pluralité de préférences de paramètres d'environnement intérieur d'occupant pour une pluralité d'utilisateurs avec une pluralité de paramètres par défaut sur la base d'une pluralité de types de commande pour une pluralité de systèmes de construction ;
la réception de données environnementales indicatives d'un état actuel d'un système de construction ;
la réception d'une rétroaction (202) d'un premier utilisateur sous la forme d'un réglage incrémentiel descriptif de l'état actuel du système de construction, dans lequel la rétroaction du premier utilisateur est reçue sous la forme d'une plainte (204) sur la base d'une action initiée par l'utilisateur ou sous la forme d'une entrée d'enquête (206) sur la base d'une action initiée par le système, et un enregistrement d'événement correspondant est stocké avec les préférences de paramètres d'environnement intérieur d'occupant,
la détermination d'un réglage de l'au moins un paramètre de commande en tant que décalage par rapport à l'état actuel du système de construction, dans lequel le réglage est déterminé sur la base du mappage du réglage incrémentiel descriptif au décalage par rapport à l'état actuel via une table de traduction qui indique comment le décalage est déterminé ;
le réglage, par le processeur (170) du système de traitement de préférences (110), d'au moins un paramètre de commande des préférences de paramètres d'environnement intérieur d'occupant pour le premier utilisateur sur la base de la rétroaction (202) du premier utilisateur et sur la base du réglage déterminé à l'étape précédente ; et
le fonctionnement d'au moins un dispositif de commande (106) d'un système d'automatisation de construction (104) sur la base du réglage de l'au moins un paramètre de commande des préférences de paramètres d'environnement intérieur d'occupant.

2. Procédé selon la revendication 1, comprenant également :
la détermination d'un emplacement du premier utilisateur associé à la rétroaction (202) du premier utilisateur ; et
le stockage d'un enregistrement de l'emplacement avec les préférences de paramètres d'environnement intérieur d'occupant.

3. Procédé selon la revendication 2, comprenant également :
la détermination d'un moment de la journée pour recevoir la rétroaction (202) du premier utilisateur ; et
le stockage d'un enregistrement du moment de la journée avec les préférences de paramètres d'environnement intérieur d'occupant.

4. Procédé selon la revendication 3, comprenant également :
la détermination d'un moment de l'année pour recevoir la rétroaction (202) du premier utilisateur ; et
le stockage d'un enregistrement du moment de l'année avec les préférences de paramètres d'environnement intérieur d'occupant.

5. Procédé selon la revendication 1, dans lequel la rétroaction (202) du premier utilisateur est reçue sous la forme d'une demande de changement du premier utilisateur sur la base de l'action initiée par l'utilisateur, et la demande de changement est transmise au système d'automatisation de construction (104).

6. Procédé selon la revendication 1, comprenant également :
la détermination d'une ou de plusieurs relations entre un historique d'événements et des données d'emplacement des utilisateurs sur la base des préférences de paramètres d'environnement intérieur d'occupant ; et
l'émission d'un résumé des une ou plusieurs relations.

7. Procédé selon la revendication 6, dans lequel le résumé des une ou plusieurs relations comprend un ou plusieurs éléments parmi : des préférences groupées des utilisateurs, des préférences groupées au niveau d'un ou de plusieurs emplacements, un historique des plaintes des types de commande, un historique des plaintes d'un utilisateur ou d'un groupe d'utilisateurs et un résumé de réglage des changements apportés à l'au moins un paramètre de commande.

8. Système de traitement de préférences (110) pour la gestion de préférences d'environnement intérieur, le système de traitement de préférences comprenant :
un processeur (170) ; et
une mémoire (172) comprenant des instructions exécutables par ordinateur qui, lorsqu'elles sont exécutées par le processeur,
amènent le processeur à réaliser des opérations, les opérations comprenant :
l'initialisation d'une pluralité de préférences de paramètres d'environnement intérieur d'occupant pour une pluralité d'utilisateurs avec une pluralité de paramètres par défaut sur la base d'une pluralité de types de commande pour une pluralité de systèmes de construction ;
la réception de données environnementales indicatives d'un état actuel d'un système de construction ;
la réception d'une rétroaction (202) d'un premier utilisateur sous la forme d'un réglage incrémentiel descriptif de l'état actuel du système de construction ; dans lequel le système de traitement de préférences est configuré pour recevoir la rétroaction du premier utilisateur sous la forme d'une plainte (204) sur la base d'une action initiée par l'utilisateur ou sous la forme d'une entrée d'enquête (206) sur la base d'une action initiée par le système, et le système de traitement de préférences (110) est configuré pour stocker un enregistrement d'événement correspondant avec les préférences de paramètres d'environnement intérieur d'occupant ;
la détermination du réglage de l'au moins un paramètre de commande en tant que décalage par rapport à l'état actuel du système de construction, dans lequel le réglage est déterminé sur la base du mappage du réglage incrémentiel descriptif au décalage par rapport à l'état actuel via une table de traduction qui indique comment le décalage est déterminé ;
le réglage d'au moins un paramètre de commande des préférences de paramètres d'environnement intérieur d'occupant pour le premier utilisateur sur la base de la rétroaction (202) du premier utilisateur et sur la base du réglage déterminé à l'étape précédente ; et
le fonctionnement d'au moins un dispositif de commande (106) d'un système d'automatisation de construction (104) sur la base du réglage de l'au moins un paramètre de commande des préférences de paramètres d'environnement intérieur d'occupant.

9. Système de traitement de préférences selon la revendication 8, dans lequel les opérations comprennent également :
la détermination d'un emplacement du premier utilisateur associé à la rétroaction (202) du premier utilisateur ; et
le stockage d'un enregistrement de l'emplacement avec les préférences de paramètres d'environnement intérieur d'occupant.

10. Système de traitement de préférences selon la revendication 9, dans lequel les opérations comprennent également :
la détermination d'un moment de la journée pour recevoir la rétroaction (202) du premier utilisateur ; et
le stockage d'un enregistrement du moment de la journée avec les préférences de paramètres d'environnement intérieur d'occupant.

11. Système de traitement de préférences selon la revendication 10, dans lequel les opérations comprennent également :
la détermination d'un moment de l'année pour recevoir la rétroaction (202) du premier utilisateur ; et
le stockage d'un enregistrement du moment de l'année avec les préférences de paramètres d'environnement intérieur d'occupant.

12. Système de traitement de préférences selon la revendication 8, dans lequel la rétroaction (202) du premier utilisateur est reçue sous la forme d'une demande de changement du premier utilisateur sur la base d'une action initiée par l'utilisateur, et la demande de changement est transmise au système d'automatisation de construction (104).

13. Système de traitement de préférences selon la revendication 8, dans lequel les opérations comprennent également :
la détermination d'une ou de plusieurs relations entre un historique d'événements et des données d'emplacement des utilisateurs sur la base des préférences de paramètres d'environnement intérieur d'occupant ; et
l'émission d'un résumé des une ou plusieurs relations.

14. Système de traitement de préférences selon la revendication 13, dans lequel le résumé des une ou plusieurs relations comprend un ou plusieurs des éléments suivants : des préférences groupées des utilisateurs, des préférences groupées au niveau d'un ou de plusieurs emplacements, un historique des plaintes des types de commande, un historique des plaintes d'un utilisateur ou d'un groupe d'utilisateurs et un résumé de réglage des changements apportés à l'au moins un paramètre de commande.
